# EUROPEAN PATENT SPECIFICATION

(11) **EP 2 268 880 B1**
(45) Date of publication and mention of the grant of the patent: **10.10.2018**
(21) Application number: 09729227.0
(22) Date of filing: 30.01.2009
(51) Int. Cl.: E05C 17/20

(54) **AUTOMOTIVE DOOR CHECK WITH ENERGY STORAGE BODY**
AUTOMOBILTÜRPRÜFUNG MIT ENERGIESPEICHERKÖRPER
TIRANT DE PORTE POUR AUTOMOBILE AVEC CORPS DE STOCKAGE D'ÉNERGIE

(30) Priority: 07.04.2008 CA 2628528
(43) Date of publication of application: 05.01.2011
(73) Proprietor: MULTIMATIC INC., Markham, Ontario L3R 5E5 (CA)
(72) Inventor: NG, Billy Chean Wang, Newmarket Ontario L3X 2H7 (CA)
(74) Representative: Maiwald Patent- und Rechtsanwaltsgesellschaft mbH
(86) International application number: PCT/CA2009/000125
(87) International publication number: WO 2009/124373

(56) References cited:
- EP-B1- 0 668 476
- EP-B1- 1 759 080
- WO-A1-00/34608
- DE-A1- 2 449 770
- DE-A1- 4 140 639
- DE-A1-102004 032 250
- GB-A- 790 782
- US-A- 2 125 010
- US-A1- 2008 066 260

## Description

### FIELD OF THE INVENTION

This invention relates to automotive door check devices, and in particular to a compact mechanical device capable of holding an automotive door in a number of predetermined open positions with a predetermined force.

### DESCRIPTION OF THE PRIOR ART

It has been found useful to check the movement of an automotive door in a number of predetermined open positions to assure convenient and safe ingress/egress of the occupants. The door is normally checked against movement in at least one open position with an effort or resistive force adequate to resist wind gusts and the effect of parking on an incline or grade.

The most common form of automotive door check apparatus is a mechanical device that resists motion by releasably storing energy in response to forced motion of the system. These devices, located between the vehicle's body structure and door, can be configured to be integral with the door hinge or separate as autonomous mechanical assemblies. Energy storage is generally achieved by a form of spring with coil and torsion arrangements being the most popular configurations. As the door is opened or closed, the door check apparatus is configured to release energy entering the check positions and to store it when moving out of the check positions. The most common method of storing energy in the spring system is by means of a cam arrangement that moves in conjunction with the door. This cam can work within the hinge to ultimately produce a torque around the pivot axis of the hinge, or can work linearly in a separate checking apparatus which produces a force vector to resist door movement at selected opening positions.

US5173991 to Carswell describes a common type of separate door checking apparatus that utilizes a molded link member to provide a cam arrangement and a pair of coil springs to releasably store energy. The coil springs are contained in a check housing and are acted upon by the molded link member via ball bearings and ball bearing retainers. The check housing is rigidly attached to the vehicle door and the molded link member is pivotally connected to the vehicle body structure. The device of Carswell provides a robust, reliable and relatively compact solution for checking the movement of an automotive door. There are numerous similar solutions that utilize rollers or sliders in place of the ball bearings of Carswell. US6370733 to Paton et. al. describes a separate checking apparatus that utilizes a molded link member or check arm and rollers. US6842943 to Hoffmann et. al. describes a separate checking apparatus that utilizes a molded check arm and sliders.

Because the automotive door check apparatus must be located between the vehicle's body structure and door, it is forced to occupy a severely restricted package space as there is limited clearance between the vehicle body structure and the door and very little volume available within the door. Additionally, the weight of the automotive door check apparatus must not be too great as a significant proportion of the door check apparatus mass resides within the door profile, which swings on a pivot and is highly sensitive to weight. In general, the manufacturing costs of automotive components are among the lowest of any comparable industry and so simple solutions with low part counts are highly desirable. The main focus of an automotive door check development is to attain the required check efforts in the smallest possible package at the lowest achievable weight and cost. Using as few components as possible is highly desirable. The type of spring and its related strain energy storage capability combined with the package efficiency of the actuation mechanism ultimately dictate the overall effectiveness of the automotive door check apparatus.

### GENERAL DESCRIPTION OF THE INVENTION

Accordingly, it would be advantageous to create an automotive door check apparatus that provides identical functional performance to the prior art configurations but does so with fewer components and moving parts than these existing arrangements.

The present invention reduces the complexity, weight and cost of an automotive door check apparatus by combining the functions of the check housing and mounting bracket with that of the energy storage device. This combining of functions eliminates the requirement for separate springs, multiple piece check housings and ball bearings, rollers or sliders as utilized by the prior art devices. The door check apparatus of the present invention is reduced to two moving parts from a minimum of seven in the prior art arrangements.

The present invention replaces the check housing, mounting bracket and springs of the conventional prior art automotive door check apparatus with a single piece unitary check body manufactured from a resilient material capable of storing and releasing energy. This unitary check body is rigidly attached to the vehicle door via a mounting face and is configured with a pair of compliant leaves and a guidance arrangement. A check arm is configured with detent features and cam surfaces and is adapted to pivotally connect to the vehicle body structure and pass into the vehicle door through a suitable access opening. The unitary check body is rigidly attached to the vehicle door at the access opening. The check arm is adapted to move through the unitary check body and slideably interface with the guidance arrangement in response to rotary motion of the vehicle door relative to the vehicle body structure. This relative rotary motion is checked with predetermined forces at positions determined by the relationship between the detent features of the check arm relative to the guidance arrangement of the unitary check body. The predetermined check forces are generated from the energy stored and released by the compliant leaves of the unitary check body. The compliant leaves of the unitary check body store and release energy in response to the motion of the guidance arrangement as it is forced to follow the profile of the detent features and cam surfaces of the check arm as the check arm moves through the unitary check body. As is common in the art, the predetermined check forces act primarily along the centerline axis of the check arm and the check arm is installed with an offset to the hinge swing centerline so as to induce a checking moment to resist relative rotary motion between the vehicle door and vehicle body structure. In this manner the automotive door check apparatus of the present invention provides identical check force and moment generation to the devices of the prior art with only two primary components.

In a further aspect of the present invention the check arm is configured with a pivot boss and is pivotally connected to a mounting bracket via a pivot rivet. The mounting bracket is then rigidly mounted to the vehicle body structure via bolting, welding, bonding, riveting or similar fastening means.

In a preferred embodiment of the present invention the check arm is formed from a moldable plastic material and contains a metallic reinforcement co-molded within the plastic material.

In a further aspect of the present invention the check arm is configured with a bump stop that is adapted to pass through the guidance arrangement of the unitary check body with no contact. The vehicle door is prevented from further rotation at its full open swing limit by the bump stop contacting the unitary check body at its mounting face. In this manner the stop loads associated with preventing further rotation of the vehicle door are transferred directly to the vehicle door structure rather than through the unitary check body. This allows the unitary check body to be optimized for the single function of generating the predetermined checking forces via the compliant leaves rather than also being required to carry full open stop loads. This bump stop arrangement is a primary differentiator over the prior art in which the check housings are configured to withstand the full open swing limit stop loads.

In a preferred embodiment of the present invention an energy absorber is incorporated into the bump stop of the check arm so that when it contacts the backside of the mounting face of the unitary check body the kinetic energy carried by the moving vehicle door is dissipated. By dissipating the kinetic energy in a controlled manner the vehicle door is prevented from bouncing closed when it reaches the full open swing limit.

In an additional aspect of the present invention the check arm is adapted to accept a paint clip device that is configured with additional detent features and cam surfaces. The paint clip device is configured to provide additional check positions as required during the paint and assembly process of the vehicle. The paint clip device is configured to be easily removable from the check arm after the paint and assembly process. In this way the automotive door check apparatus of the present invention is capable of providing a temporary check position at the vehicle door full closed limit to facilitate painting prior to the door latch being installed.

In a preferred embodiment of the present invention the unitary check body is manufactured from a high strength steel or a similar compliant but strong material. The mechanical properties of this resilient material, the geometric configuration of the compliant leaves and the profile shape of the detent features and cam surfaces are configured so that the resilient material never exceeds its elastic limit within the operating range of the automotive door check apparatus.

In further aspects of the present invention:
a) the unitary check body contains a pair of compliant leaves and a guidance arrangement, and is adapted to be rigidly mounted to a vehicle door via bolting, welding, bonding, riveting or similar fastening means;
b) the unitary check body is manufactured from a high strength steel so that the compliant leaves are capable of storing and releasing energy;
c) the check arm contains a bump stop, cam surfaces and detent features, and is pivotally connected to the vehicle body structure via a mounting bracket and pivot rivet arrangement and configured to slideably interface with the guidance arrangement of the unitary check body;
d) the check arm is formed from a moldable plastic material and contains a reinforcement co-molded within the plastic material;
e) the bump stop feature incorporates an energy absorbing material co-molded with the plastic material of the check arm;
f) the mounting bracket is rigidly mounted to the vehicle body via bolting, welding, bonding, riveting or similar fastening means;
such that rotary motion of the vehicle door relative to the vehicle body structure is checked with predetermined forces generated from the energy stored and released by the compliant leaves of the unitary check body, at positions determined by the relationship between the detent features of the check arm relative to the guidance arrangement, and the vehicle door is prevented from further rotation at its full open swing limit by the bump stop feature contacting the unitary check body at its mounting surface so that stop loads associated with preventing further rotation are transferred directly to the vehicle door structure, and the vehicle door is prevented from bouncing closed by the energy absorbing material.

Further aspects of the invention will become apparent from the following description.

### BRIEF DESCRIPTION OF THE DRAWINGS

FIG. 1 is a perspective view of the inventive automotive door check apparatus;
FIG. 2 is a perspective view of the inventive automotive door check apparatus in a typical automotive installation;
FIG. 3 is a plan view of the check arm of the inventive automotive door check apparatus;
FIG. 4 is a plan view of the inventive automotive door check apparatus shown with the vehicle door at its full open swing limit;
FIG. 5 is a perspective view of the check arm of the inventive automotive door check apparatus showing partial interior detail;
FIG. 6 is a perspective view of an alternative embodiment of the inventive automotive door check apparatus;
FIG. 7 is a perspective view of a further alternative embodiment of the inventive automotive door check apparatus including a paint clip device;
FIG. 8 is a perspective view of a further alternative embodiment of the inventive automotive door check apparatus illustrating removal of the paint clip device;
FIG. 9 is a perspective view of a further alternative embodiment of the inventive automotive door check apparatus with the paint clip device removed.

### DETAILED DESCRIPTION OF THE INVENTION

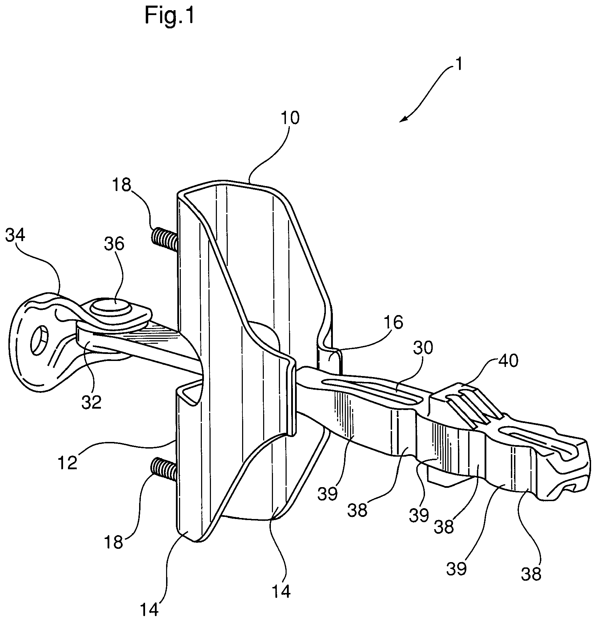

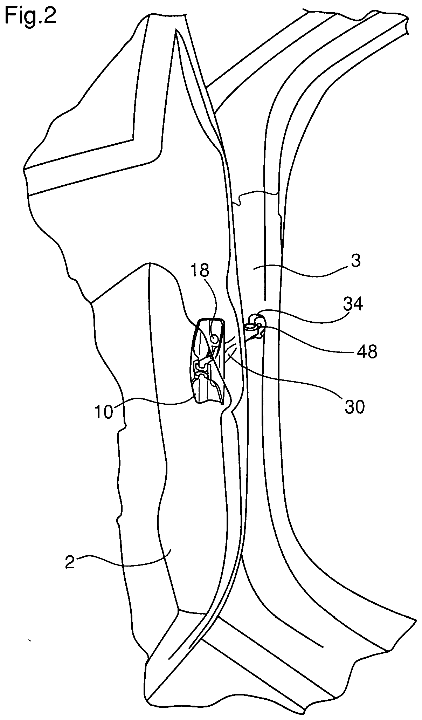

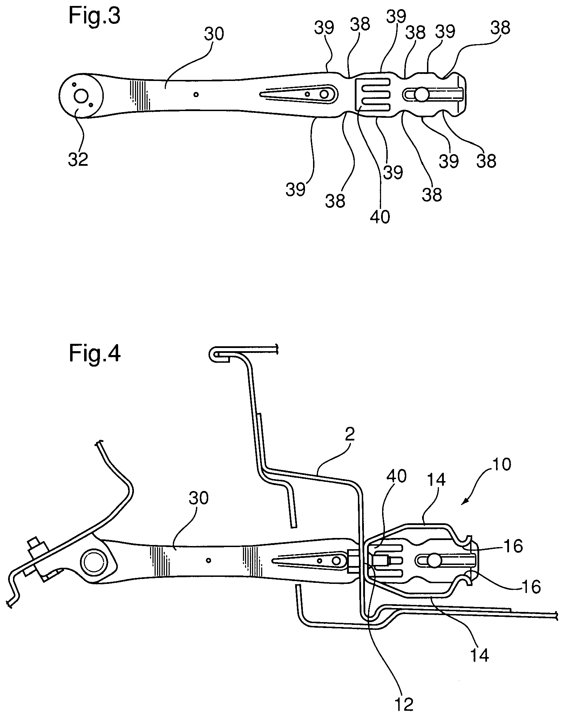

Referring to Figures 1 and 3, an automotive door check apparatus (1) consists of a unitary check body (10) and a check arm (30). The unitary check body (10) is configured with a mounting face (12), a pair of compliant leaves (14), a guidance arrangement (16) and at least one mounting fastener (18). The check arm (30) is configured with a pivot boss (32), a mounting bracket (34), a pivot rivet (36), detent features (38), cam surfaces (39) and a bump stop (40). Referring to Figures 1 and 2, the unitary check body (10) is adapted to rigidly attach to a vehicle door (2) via its at least one mounting fastener (18). The check arm (30) is adapted to rigidly mount to a vehicle body structure (3) via its mounting bracket (34) and at least one attachment fastener (48). The check arm (30) is configured to rotate around its pivot rivet (36) and to move through the unitary check body (10) and slideably interface with the guidance arrangement (16).

Relative rotary motion between the vehicle door (2) and vehicle body structure (3) causes the check arm (30) to move through the unitary check body (10) and slideably interface with the guidance arrangement (16) forcing the compliant leaves (14) to move in response to the cam surfaces (39) and detent features (38) of the check arm (30).

The unitary check body (10) is manufactured from a resilient material capable of storing and releasing energy while generating predetermined contact forces in response to the displacement of the compliant leaves (14). The mechanical properties of the resilient material, geometric configuration of the compliant leaves (14) and profile shape of the detent features (38) and cam surfaces (39) are configured so that the resilient material never exceeds its elastic limit within the operating range of the automotive door check apparatus (1). In a preferred embodiment of the present invention the unitary check body (10) resilient material is a high strength steel. In an alternative embodiment of the present invention the unitary check body (10) resilient material is a high strength composite or a similar compliant but strong material.

When the check arm (30) moves through the unitary check body (10) it slideably interfaces with the guidance arrangement (16) and the compliant leaves (14) move into the detent features (38) releasing energy and lowering their contact forces. As the check arm (30) continues to move through unitary check body (10) and slideably interface with the guidance arrangement (16) the complaint leaves (14) move out of the detent features (38) and up onto the cam surfaces (39) increasing their contact forces and storing energy. The contact forces in combination with the profile shape of the detent features (38) generate predetermined checking forces along the axis of the check arm (30). Relative rotary motion of the vehicle door (2) and the vehicle body structure (3) is checked by the predetermined checking forces at positions determined by the relationship between the detent features (38) of the check arm (30) relative to the guidance arrangement (16).

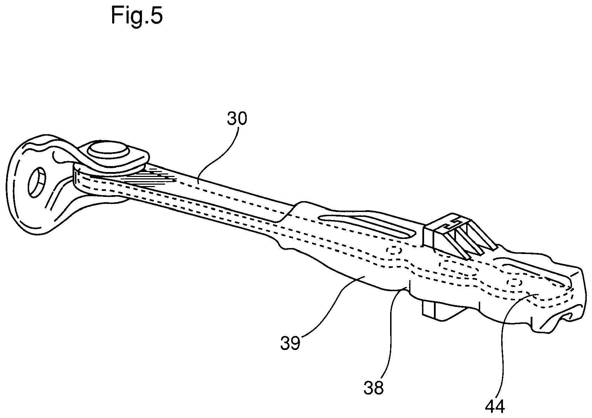

In a preferred embodiment of the present invention the check arm (30) is formed from a moldable plastic material which integrally includes the detent features (38), cam surfaces (39), pivot boss (32) and bump stop (40). Referring to Figure 5, a further aspect of the preferred embodiment is illustrated in which the molded plastic check arm (30) contains a co-molded reinforcement (44) manufactured from steel, aluminum, reinforced plastic or a similar structural material.

Figure 4 illustrates a further aspect of the door check apparatus, showing the vehicle door (2) at its full open swing limit and the bump stop (40) in contact with the backside of the mounting face (12) of the unitary check body (10). Further rotation of the vehicle door (2) is prevented by the bump stop (40) transferring the stop loads directly from the check arm (30) into the vehicle door structure through the single material thickness of the mounting face (12) of the unitary check body (10). The short load path between the bump stop (40) and vehicle door structure allows the unitary check body (10) to be optimized for the single function of generating the predetermined checking forces via the compliant leaves (14) rather than also being required to carry full open stop loads. This bump stop arrangement is a primary differentiator over the prior art in which the check housings are configured to withstand the full open swing limit stop loads.

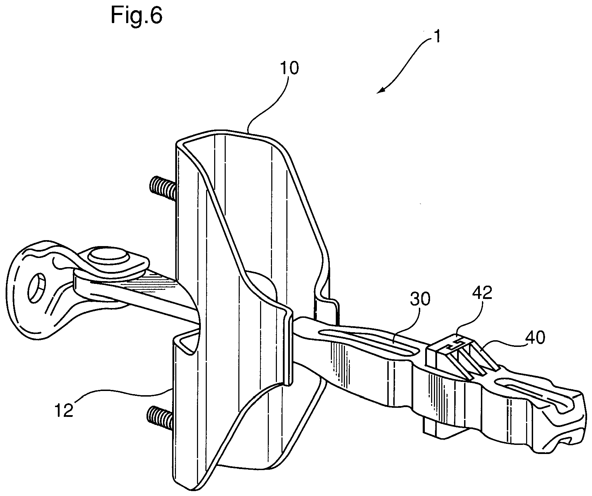

A preferred embodiment of the bump stop (40) of the check arm (30) is illustrated in Figure 6. An energy absorber (42) is incorporated into the bump stop (40) so that when it contacts the backside of the mounting face (12) of the unitary check body (10) the kinetic energy carried by the moving vehicle door (2) is dissipated thereby preventing the vehicle door (2) from bouncing closed when it reaches the full open swing limit. In a further aspect of this preferred embodiment, the energy absorber (42) is co-molded with check arm (30).

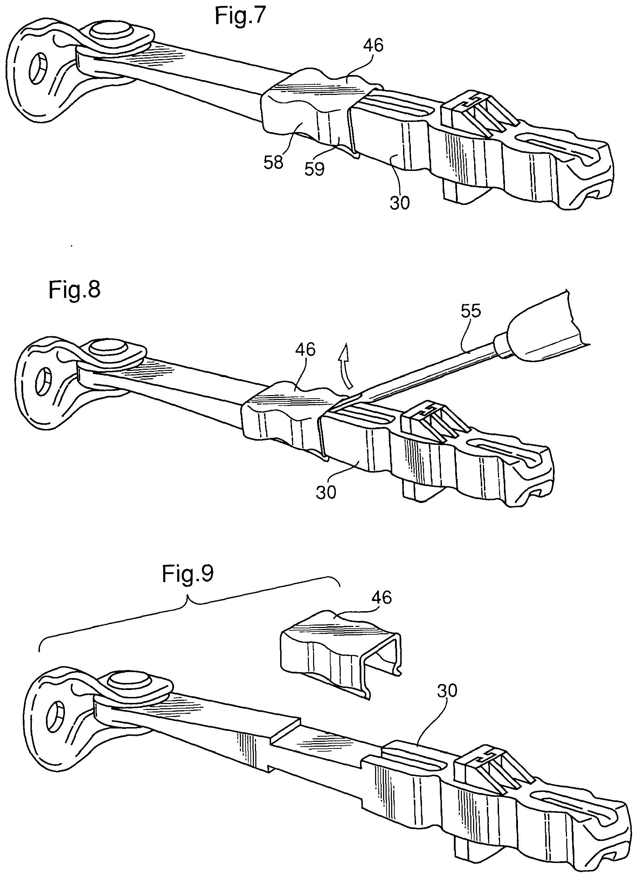

As illustrated in Figures 7, 8 and 9, in a further aspect of the present invention, the check arm (30) is adapted to accept a paint clip device (46) that is configured with additional detent features (58) and cam surfaces (59). The paint clip device (46) is configured to provide additional check positions as required during the painting and assembly process of the vehicle. The paint clip device (46) is configured to be easily removable from the check arm (30) after the painting and assembly process. Figure 8 illustrates the paint clip device (46) being removed from the check arm (30) using a screwdriver (55) to pry it free and Figure 9 shows the check arm (30) with the paint clip device (46) completely removed. In this way the automotive door check apparatus (1) of the present invention is capable of providing a temporary check position at the vehicle door (2) full closed limit to facilitate painting prior to the door latch being installed.

## Claims

1. A door check apparatus (1) for an automobile comprising:
a) a unitary check body (10) comprising a mounting face (12) that is attachable to a vehicle door (2), a pair of opposing compliant leaves (14) extending from the mounting face (12) and a guidance arrangement (16) formed therebetween by the opposing compliant leaves (14);
b) a check arm (30) configured to be pivotally connected to a vehicle body structure (3), the check arm (30) comprising at least one cam surface (39) and at least one detent feature (38) that slideably interface with the guidance arrangement (16) of the unitary check body (10);
wherein the unitary check body (10) is manufactured from a resilient material so that the compliant leaves (14) are capable of storing and releasing energy in response to the sliding interface of the at least one cam surface (39) and the at least one detent feature (38) of the check arm (30) relative to the guidance arrangement (16).

2. The door check apparatus of Claim 1, wherein each of the opposing compliant leaves (14) is substantially perpendicular to the mounting face (12).

3. The door check apparatus of Claim 1 or 2, wherein each of the opposing compliant leaves (14) has a free end, and the free ends of the opposing compliant leaves (14) form the guidance arrangement (16) therebetween.

4. The door check apparatus of any one of Claims 1 to 3, wherein the check arm (30) comprises two or more cam surfaces (39), of which every two adjacent cam surfaces (39) form the at least one detent feature (38) therebetween.

5. The door check apparatus of any one of Claims 1 to 4, wherein rotary motion of the vehicle door (2) relative to the vehicle body structure (3) is checked with predetermined forces at positions determined by the relationship between the detent features (38) of the check arm (30) relative to the guidance arrangement (16) of the unitary check body (10).

6. The door check apparatus of any one of Claims 1 to 5, wherein the unitary check body (10) resilient material is a high strength steel.

7. The door check apparatus of any one of Claims 1 to 6, wherein the check arm (30) is formed from a moldable plastic material.

8. The door check apparatus of Claim 7, wherein the check arm (30) contains a reinforcement co-molded within the plastic material.

9. The door check apparatus of Claim 8, wherein the check arm reinforcement is manufactured from steel, aluminum, reinforced plastic or a similar structural material.

10. The door check apparatus of any one of Claims 1 to 6, wherein the check arm (30) is formed from a metallic material by casting, forging or similar means.

11. The door check apparatus of any one of Claims 1 to 10, wherein the check arm (30) is pivotally connected to the vehicle body structure (3) via a mounting bracket (34) and pivot rivet arrangement (36).

12. The door check apparatus of any one of Claims 1 to 11, further comprising a paint clip device (46), wherein the check arm (30) is adapted to accept said paint clip device (46).

13. The door check apparatus of claim 12, wherein the paint clip device (46) is configured to provide additional check positions as required during a painting and assembly process.

14. The door check apparatus of Claim 12, wherein the paint clip device (46) is configured with additional detent features (58) and cam surfaces (59).

15. The door check apparatus of Claim 14, wherein the paint clip device (46) is configured to be removable from the check arm (30) after a painting and assembly process.

16. The door check apparatus of any one of Claims 1 to 15, wherein the check arm (30) contains a bump stop feature (40) that is configured to contact the unitary check body (10) at the full open swing limit of the vehicle door (2) so as to prevent further rotation.

17. The door check apparatus of Claim 16, wherein the bump stop feature is adapted to contact the mounting face (12) of the unitary check body (10) so that the stop loads associated with preventing further rotation are transferred directly to the vehicle door structure (2).

18. The door check apparatus of Claim 17, wherein the bump stop feature (40) incorporates an energy absorbing material configured to prevent the vehicle door (2) from bouncing closed when it reaches the full open swing limit.

19. The door check apparatus of Claim 18, wherein the energy absorbing material is co-molded with the plastic material of the check arm.

## Patentansprüche

1. Türkontrollvorrichtung (1) für ein Kraftfahrzeug, umfassend:
a) einen einheitlichen Kontrollkörper (10) umfassend eine Montagefläche (12), die an einer Fahrzeugtür (2) befestig werden kann, ein Paar gegenüberliegende nachgiebige Blätter (14), die sich von der Montagefläche (12) erstrecken, und eine Führungsanordnung (16), die dazwischen durch die gegenüberliegenden nachgiebigen Blätter (14) gebildet ist;
b) einen Kontrollarm (30), der eingerichtet ist, um schwenkbar mit einer Fahrzeugkörperstruktur (3) verbunden zu sein, wobei der Kontrollarm (30) mindestens eine Nockenfläche (39) und mindestens ein Rastmerkmal (38) umfasst, die gleitend mit der Führungsanordnung (16) des einheitlichen Kontrollkörpers (10) verbunden sind;
wobei der einheitliche Kontrollkörper (10) aus einem elastischen Material hergestellt ist, so dass die nachgiebigen Blätter (14) in der Lage sind, Energie in Reaktion auf die gleitende Schnittfläche der mindestens einen Nockenfläche (39) und des mindestens einen Rastmerkmals (38) des Kontrollarms (30) relativ zur Führungsanordnung (16) zu speichern und freizugeben.

2. Türkontrollvorrichtung nach Anspruch 1, wobei jedes der gegenüberliegenden nachgiebigen Blätter (14) im Wesentlichen senkrecht zu der Montagefläche (12) ist.

3. Türkontrollvorrichtung nach Anspruch 1 oder 2, wobei jedes der gegenüberliegenden nachgiebigen Blätter (14) ein freies Ende aufweist und die freien Enden der gegenüberliegenden nachgiebigen Blätter (14) die Führungsanordnung (16) dazwischen bilden.

4. Türkontrollvorrichtung nach einem der Ansprüche 1 bis 3, wobei der Kontrollarm (30) zwei oder mehr Nockenflächen (39) umfasst, von denen jeweils zwei benachbarte Nockenflächen (39) das mindestens eine Rastmerkmal (38) dazwischen bilden.

5. Türkontrollvorrichtung nach einem der Ansprüche 1 bis 4, wobei die Drehbewegung der Fahrzeugtür (2) relativ zu der Fahrzeugkörperstruktur (3) mit vorbestimmten Kräften an Positionen kontrolliert wird, die durch die Beziehung zwischen den Rastmerkmalen (39) des Kontrollarms (30) relativ zur Führungsanordnung (16) des einheitlichen Kontrollkörpers (10) bestimmt sind.

6. Türkontrollvorrichtung nach einem der Ansprüche 1 bis 5, wobei das elastische Material des einheitlichen Kontrollkörpers (10) ein hochfester Stahl ist.

7. Türkontrollvorrichtung nach einem der Ansprüche 1 bis 6, wobei der Kontrollarm (30) aus einem formbaren Kunststoffmaterial gebildet ist.

8. Türkontrollvorrichtung nach Anspruch 7, wobei der Kontrollarm (30) eine Verstärkung aufweist, die mit dem Kunststoffmaterial zusammengeformt ist.

9. Türkontrollvorrichtung nach Anspruch 8, wobei die Kontrollarmverstärkung aus Stahl, Aluminium, verstärktem Kunststoff oder einem ähnlichen Strukturmaterial hergestellt ist.

10. Türkontrollvorrichtung nach einem der Ansprüche 1 bis 6, wobei der Kontrollarm (30) aus einem metallischen Material durch Gießen, Schmieden oder einem ähnlichen Mittel gebildet ist.

11. Türkontrollvorrichtung nach einem der Ansprüche 1 bis 10, wobei der Kontrollarm (30) schwenkbar mit der Fahrzeugkörperstruktur (3) über eine Befestigungsklammer (34) und eine Schwenknietanordnung (36) verbunden ist.

12. Türkontrollvorrichtung nach einem der Ansprüche 1 bis 11 ferner eine Farbklammervorrichtung (46) umfasst, wobei der Kontrollarm (30) zur Aufnahme der Farbklammervorrichtung (46) ausgelegt ist.

13. Türkontrollvorrichtung nach Anspruch 12, wobei die Farbklammervorrichtung (46) eingerichtet ist, zusätzliche Kontrollpositionen bereitzustellen, wie sie während eines Lackier- und Montageprozesses benötigt werden.

14. Türkontrollvorrichtung nach Anspruch 12, wobei die Farbklammervorrichtung (46) mit zusätzlichen Rastmerkmalen (58) und Nockenflächen (59) eingerichtet ist.

15. Türkontrollvorrichtung nach Anspruch 14, wobei die Farbklammervorrichtung (46) eingerichtet ist, nach einem Lackier- und Montageprozess von dem Kontrollarm (30) entfernbar zu sein.

16. Türkontrollvorrichtung nach einem der Ansprüche 1 bis 15, wobei der Kontrollarm (30) ein Anschlagpuffermerkmal (40) aufweist, das zum Kontaktieren des einheitlichen Kontrollkörpers (10) bei der vollen Öffhungsschwenkgrenze der Fahrzeugtür (2) eingerichtet ist, um eine weitere Drehung zu verhindern.

17. Türkontrollvorrichtung nach Anspruch 16, wobei das Anschlagpuffermerkmal zum Kontaktieren der Montagefläche des einheitlichen Kontrollkörpers (10) ausgelegt ist, so dass die mit der Verhinderung der weiteren Drehung verbundenen Anhaltelasten direkt auf die Fahrzeugtürstruktur (2) übertragen werden.

18. Türkontrollvorrichtung nach Anspruch 17, wobei das Anschlagpuffermerkmal (40) ein energieabsorbierendes Material enthält, das eingerichtet ist, um zu verhindern, dass die Fahrzeugtür (2) prallend geschlossen wird, wenn sie die volle Öffnungsschwenkgrenze erreicht.

19. Türkontrollvorrichtung nach Anspruch 18, wobei das energieabsorbierende Material mit dem Kunststoffmaterial des Kontrollarms zusammengeformt ist.

## Revendications

1. Un appareil (1) formant tirant de porte pour une automobile comprenant :
a) un corps de tirant (10) unitaire comprenant une face de montage (12) apte à être fixée à une porte de véhicule (2), une paire de parois minces (14) opposées flexibles s'étendant depuis la face de montage (12) et un agencement de guidage (16) formés entre elles par les parois minces (14) opposées flexibles ;
b) un bras de tirant (30) configuré pour être relié de manière pivotante à une structure de carrosserie (3), le bras de tirant (30) comprenant au moins une surface de came (39) et au moins une configuration à détente (38) qui vient en interface de coulissement avec l'agencement de guidage (16) du corps de tirant (10) unitaire ;
dans lequel le corps de tirant (10) unitaire est fabriqué en un matériau élastique de sorte que les parois minces flexibles (14) sont aptes à stocker et à libérer de l'énergie en réponse à l'interface de coulissement de ladite au moins une surface de came (39) et de ladite au moins une configuration à détente (38) du bras de tirant (30) par rapport à l'agencement de guidage (16).

2. L'appareil formant tirant de porte selon la revendication 1, dans lequel chacune des parois minces (14) opposées flexibles est sensiblement perpendiculaire à la face de montage (12).

3. L'appareil formant tirant de porte selon la revendication 1 ou la revendication 2, dans lequel chacune des parois minces (14) opposées flexibles a une extrémité libre, et les extrémités libres des parois minces (14) opposées flexibles forment l'arrangement de guidage (16) entre elles.

4. L'appareil formant tirant de porte selon l'une quelconque des revendications 1 à 3, dans lequel le bras de tirant (30) comprend deux ou plusieurs surfaces de came (39), chaque paire de deux surfaces de came (39) adjacentes formant au moins une configuration à détente (38) entre les surfaces.

5. L'appareil formant tirant de porte selon l'une quelconque des revendications 1 à 4, dans lequel le mouvement rotatif de la porte de véhicule (2) par rapport à la structure de carrosserie (3) est contrôlé au moyen de forces prédéterminées en des positions déterminées par la relation entre les configurations à détente (38) du bras de tirant (30) par rapport à l'agencement de guidage (16) du corps de tirant (10) unitaire.

6. L'appareil formant tirant de porte selon l'une quelconque des revendications 1 à 5, dans lequel le matériau élastique du corps de tirant (10) unitaire est un acier à haute résistance.

7. L'appareil formant tirant de porte selon l'une quelconque des revendications 1 à 6, dans lequel le bras de tirant (30) est formé à partir d'une matière plastique apte à être moulée.

8. L'appareil formant tirant de porte selon la revendication 7, dans lequel le bras de tirant (30) contient un renfort co-moulé dans la matière plastique.

9. L'appareil formant tirant de porte selon la revendication 8, dans lequel le renfort de bras de tirant est fabriqué en acier, aluminium, plastique renforcé ou un matériau structurel similaire.

10. L'appareil formant tirant de porte selon l'une quelconque des revendications 1 à 6, dans lequel le bras de tirant (30) est formé à partir d'un matériau métallique par moulage, forgeage ou moyen similaire.

11. L'appareil formant tirant de porte selon l'une quelconque des revendications 1 à 10, dans lequel le bras de tirant (30) est relié de manière pivotante à la structure de carrosserie (3) par un étrier de montage (34) et un agencement de rivet pivotant (36).

12. L'appareil formant tirant de porte selon l'une quelconque des revendications 1 à 11, comprenant en outre un dispositif (46) formant clip de peinture, le bras de tirant (30) étant adapté pour accepter ledit dispositif formant clip de peinture (46).

13. L'appareil formant tirant de porte selon la revendication 12, dans lequel le dispositif (46) formant clip de peinture est configuré pour fournir des positions supplémentaires comme cela est requis pendant un processus de peinture et d'assemblage.

14. L'appareil formant tirant de porte selon la revendication 12, dans lequel le dispositif (46) formant clip de peinture est configuré avec des configurations à détente (58) et des surfaces de came (59) supplémentaires.

15. L'appareil formant tirant de porte selon la revendication 14, dans lequel le dispositif (46) formant clip de peinture est configuré pour être amovible par rapport au bras de tirant (30) après un processus de peinture et d'assemblage.

16. L'appareil formant tirant de porte selon l'une quelconque des revendications 1 à 15, dans lequel le bras de tirant (30) comporte une configuration de butée d'arrêt (40) configurée pour entrer en contact avec le corps de tirant (10) unitaire dans la position de pivotement complet de la porte de véhicule (2) de manière à empêcher toute rotation supplémentaire.

17. L'appareil formant tirant de porte selon la revendication 16, dans lequel la configuration de butée est adaptée pour venir en contact avec la face de montage (12) du corps de tirant (10) unitaire afin que les charges d'arrêt associées au fait de prévenir une rotation supplémentaire soient directement transférées à la structure (2) de porte du véhicule.

18. L'appareil formant tirant de porte selon la revendication 17, dans lequel la configuration de butée d'arrêt (40) incorpore un matériau absorbant l'énergie configuré pour empêcher la porte de véhicule (2) de rebondir vers la position de fermeture lorsqu'elle atteint la limite de pivotement d'ouverture complet.

19. L'appareil formant tirant de porte selon la revendication 18, dans lequel le matériau absorbant l'énergie est co-moulé avec la matière plastique du bras de tirant.
